(19) **Europäisches Patentamt / European Patent Office / Office européen des brevets**

(11) **EP 2 125 662 B1**

(12) # FASCICULE DE BREVET EUROPEEN

(45) Date de publication et mention de la délivrance du brevet:
**04.04.2012 Bulletin 2012/14**

(21) Numéro de dépôt: **08762145.4**

(22) Date de dépôt: **22.02.2008**

(51) Int Cl.:
**C04B 35/484** *(2006.01)*

(86) Numéro de dépôt international:
**PCT/FR2008/050304**

(87) Numéro de publication internationale:
**WO 2008/113949 (25.09.2008 Gazette 2008/39)**

(54) **BLOC REFRACTAIRE FONDU ET COULE A FORTE TENEUR EN ZIRCONE**

FEUERFESTER SCHMELZGUSSBLOCK MIT HOHEM ZIRKONUMGEHALT

MOLTEN AND CAST REFRACTORY BLOCK HAVING A HIGH ZIRCONIA CONTENT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.02.2007 FR 0753445**

(43) Date de publication de la demande:
**02.12.2009 Bulletin 2009/49**

(73) Titulaire: **Saint-Gobain Centre de Recherches et d'Etudes Européen**
**92400 Courbevoie (FR)**

(72) Inventeurs:
- **BOUSSANT-ROUX, Yves**
  **84140 Montfavet (FR)**
- **SCHIAVO, Edouard**
  **F-30400 Villeneuve Les Avignon (FR)**
- **ZANOLI, Alain**
  **F-92200 Neuilly Sur Seine (FR)**

(74) Mandataire: **Tanty, François et al**
**Cabinet Nony**
**3, rue de Penthièvre**
**75008 Paris (FR)**

(56) Documents cités:
**EP-A- 0 403 387      FR-A- 1 430 962**
**US-A- 5 028 572**

EP 2 125 662 B1

## EP 2 125 662 B1

### Description

L'invention concerne un nouveau bloc réfractaire fondu et coulé à forte teneur en zircone.

### Etat de la technique

Les blocs fondus et coulés, souvent appelés électrofondus, sont classiquement obtenus par fusion d'un mélange de matières premières appropriées dans un four à arc électrique. Le liquide en fusion est ensuite coulé dans un moule, puis solidifié de manière à former un bloc.

US 5 028 572 décrit un procédé dans lequel un mélange particulaire de matières premières est projeté et fondu, au moyen d'une torche plasma, de manière à former une couche de liquide en fusion à la surface d'un moule. La solidification complète de ce liquide est obtenue en moins de 10 minutes, de préférence en moins de 5 minutes, et, de préférence encore, en moins de 2 minutes après la projection.

Le bloc est ensuite refroidi jusqu'à température ambiante.

Le refroidissement peut être rapide, comme décrit dans US 5 028 572, où le bloc est exposé à l'air libre ou subit une circulation d'un fluide de refroidissement. Un refroidissement rapide conduit cependant à l'apparition de fissures dans le bloc fabriqué.

Généralement, à la place du refroidissement rapide décrit dans US 5 028 572, le bloc démoulé subit un refroidissement lent, du type « recuisson » ou « annealing » en anglais. Un tel refroidissement permet avantageusement de limiter l'apparition de fissures.

Parmi les blocs fondus et coulés, les blocs électrofondus à forte teneur en zircone, c'est-à-dire comportant plus de 85% en poids de zircone ($ZrO_2$), sont réputés pour leur qualité de très grande résistance à la corrosion sans coloration du verre et sans génération de défauts.

Le bloc ER-1195 fabriqué et commercialisé par la Société Européenne des Produits Réfractaires et couvert par le brevet EP-B-403 387 est aujourd'hui largement utilisé dans les fours de fusion du verre. Sa composition chimique comprend environ 94% de zircone, 4 à 5% de silice, environ 1% d'alumine, 0,3% d'oxyde de sodium et moins de 0,05% en poids de $P_2O_5$. Elle est typique des blocs à forte teneur en zircone utilisés pour les fours verriers.

En service, les surfaces du bloc en contact avec du verre en fusion subissent une corrosion. La diminution progressive d'épaisseur qui en résulte n'est cependant pas uniforme et on constate que la corrosion conduit à des diminutions locales d'épaisseur d'amplitudes très variables. La vie du bloc s'achève dès que, localement, une épaisseur devient trop faible.

Dans la mesure où les régions de plus faible résistance à la corrosion ne sont pas connues, il est impossible de prévoir correctement la durée de vie du bloc, c'est-à-dire la durée pendant laquelle le bloc restera en service. En effet, les régions de plus faible résistance à la corrosion ne sont pas connues. Il est donc nécessaire d'adopter un principe de précaution pour évaluer la durée de vie du bloc. De plus, la non uniformité de la corrosion conduit à une diminution de la durée de vie du bloc.

Il existe donc un besoin pour des blocs réfractaires de grandes dimensions adaptés pour être mis en contact avec des verres fondus et dont la durée de vie serait augmentée et plus prévisible qu'avec les blocs actuels. Ce besoin est encore accru lorsque les verres sont des verres très corrosifs, en particulier des verres pour écrans à plasma.

La présente invention a pour but de satisfaire ce besoin.

### Résumé de l'invention

Selon l'invention, on atteint ce but au moyen d'un bloc réfractaire fondu, coulé et recuit comportant plus de 85% (en moyenne) de zircone ($ZrO_2 + Hf_2O$), de préférence plus de 90%, de préférence encore plus de 93%, et au moins 1 % de silice ($SiO_2$), en pourcentages massiques sur la base des oxydes, et dont l'homogénéité est telle que l'écart type σ de la teneur locale en zircone « z », divisé par le volume V du bloc, soit inférieur à 7,5, de préférence à 7, de préférence inférieur à 6, de préférence encore inférieur à 4.

Avantageusement, comme cela apparaîtra plus en détail dans la suite de la description, les blocs selon l'invention se corrodent de manière plus uniforme que les blocs à forte teneur en zircone et contenant de la silice de la technique antérieure. Leur durée de vie peut donc être supérieure et être prévue de manière plus précise.

L'écart-type « σ » peut être évalué par extraction de « *n* » échantillons, choisis de manière aléatoire ou en des emplacements répartis dans le bloc, de préférence de manière sensiblement régulière, de la manière suivante :

$$\sigma = \sqrt{\frac{1}{n}\sum_{i=1}^{n}\left(z_i - \overline{z}\right)^2} \; ,$$

où

- $z_i$ désigne la teneur massique en zircone de l'échantillon « i » du bloc, et
- $\bar{z}$ désigne la teneur massique moyenne en zircone du bloc, obtenue en moyennant arithmétiquement les valeurs

$z_i$, c'est-à-dire $\left( \bar{z} = \dfrac{1}{n} \displaystyle\sum_{i=1}^{n} z_i \right)$.

De préférence *n* est supérieur à 3, de préférence à 5, de préférence encore à 10. Les emplacements des échantillons peuvent être déterminés de manière aléatoire ou être déterminés de manière à être répartis dans le bloc. De préférence, un ou plusieurs échantillons peuvent être extraits au coeur du bloc à différents niveaux du bloc, suivant la hauteur, les niveaux étant séparés d'une distance constante, par exemple de 10 cm.

De préférence, les blocs réfractaires selon l'invention susmentionnés comportent encore une et, de préférence plusieurs, des caractéristiques optionnelles suivantes.

- Le bloc réfractaire a une hauteur supérieure à 1 mètre, de préférence supérieure à 1,1 mètre.
- Le bloc réfractaire a une section, mesurée transversalement à la direction définissant la hauteur, supérieure à 0,02 $m^2$. Dans un mode de réalisation, la section transversale présente une longueur et/ou une largeur supérieure à 0,15 mètre.
- Le bloc pèse plus de 50 kg, de préférence plus de 250 kg, voire plus de 1000 kg.
- Le bloc présente la forme d'un cylindre, dont la base peut être circulaire ou non. Sa surface latérale est donc constituée par la réunion de toutes les droites ayant même direction et coupant une courbe donnée.
- Le bloc comporte une quantité de silice $SiO_2$ supérieure ou égale à 1 %, de préférence à 3 %, et/ou inférieure ou égale à 10 %, de préférence à 8 %.
- Le bloc comporte une quantité d'alumine $Al_2O_3$ supérieure ou égale à 0,1 %, de préférence supérieure ou égale à 0,5 % et/ou inférieure ou égale à 2,5%, de préférence inférieure ou égale à 1,5 %, de préférence encore à 1%, voire à 0,85%.
- Les impuretés représentent moins de 0,5%, de préférence moins de 0,1%.
- Plus de 85% de la zircone du bloc est monoclinique.
- Au coeur du bloc, plus de 50 %, voire plus de 70%, en nombre, des grains de zircone ont une taille supérieure à 200 $\mu$m.

Le bloc réfractaire a une section, mesurée transversalement à la direction définissant la hauteur, quelconque. Cette section peut par exemple être inférieure à 0,25 $m^2$, voire à 0,16 $m^2$. Dans un mode de réalisation, la section présente une longueur et/ou une largeur inférieure à 0,5 mètre, voire 0,40 mètre.

Dans un mode de réalisation où, en plus des qualités précédemment évoquées, on recherche une résistivité électrique la plus élevée possible, le bloc peut présenter encore une ou plusieurs des caractéristiques préférées suivantes :

- Le bloc comporte un dopant choisi dans le groupe formé par $V_2O_5$, $CrO_3$, $Nb_2O_5$, $MoO_3$, $Ta_2O_5$, $WO_3$ et leurs mélanges.
- $0,2\ \% \leq P$, où $P = 2,43 . V_2O_5 + 4,42 . CrO_3 + 1,66 . Nb_2O_5 + 3,07 . MoO_3 + Ta_2O_5 + 1,91 . WO_3$
- La quantité P est supérieure ou égale à 0,5 %, de préférence supérieure ou égale à 0,6 %, de préférence à 1,2 % et/ou inférieure ou égale à 3%, de préférence à 2,5 %, de préférence inférieure ou égale à 1,4%.
- Le dopant est choisi parmi $V_2O_5$, $Nb_2O_5$, $Ta_2O_5$, $WO_3$ et leurs mélanges, de préférence parmi $Nb_2O_5$, $Ta_2O_5$ et leurs mélanges.
- La quantité d'oxyde de tantale $Ta_2O_5$ est supérieure ou égale à 0,2 %, de préférence supérieure ou égale à 0,8 % et/ou inférieure ou égale à 3%, de préférence inférieure ou égale à 1,5 %, de préférence encore inférieure à 0,9%.
- La quantité d'oxyde de nobium $Nb_2O_5$ est supérieure ou égale à 0,2 %, de préférence supérieure ou égale à 0,4 % et/ou inférieure ou égale à 3%, de préférence inférieure ou égale à 1,5 %.
- Le bloc comporte une quantité d'oxydes de sodium $Na_2O$ et/ou de potassium $K_2O$ inférieure ou égale à 1%, de préférence inférieure ou égale à 0,5 %, de préférence encore inférieure ou égale à 0,1 %, de préférence toujours inférieure ou égale à 0,05 %.
- La quantité d'oxyde de bore $B_2O_3$ est inférieure ou égale à 1,5 %, de préférence inférieure à 0,8 %. De préférence cependant, la quantité de $B_2O_3$ est supérieure à 0,05%, de préférence supérieure à 0,1%, voire supérieure à 0,2%, en particulier lorsque $SiO_2 < 3\%$.
- Le bloc réfractaire comporte, en plus de la zircone $ZrO_2$, de la silice $SiO_2$, et de l'alumine $Al_2O_3$, des oxydes d'yttrium

$Y_2O_3$, de tantale $Ta_2O_5$ ou de nobium $Nb_2O_5$.

Dans un mode de réalisation où, en plus des qualités évoquées en introduction, on recherche une résistance au bullage améliorée, en particulier à des températures inférieures à 1150°C, le bloc présente encore une ou plusieurs des caractéristiques préférées suivantes :

- Le bloc comporte un dopant choisi dans le groupe formé par $Y_2O_3$ et CaO et leurs mélanges.
- La quantité d'oxyde d'yttrium $Y_2O_3$ est supérieure ou égale à 0,3 %, de préférence supérieure ou égale à 0,5 % et/ou inférieure ou égale à 3 %, de préférence inférieure à 1,5 %.
- La quantité d'oxyde de calcium CaO est supérieure ou égale à 0,2 % et/ou inférieure ou égale à 2,3 %.

L'invention concerne également un four de fusion de verre comportant un bloc réfractaire selon l'invention, en particulier dans une région destinée à être en contact avec du verre en fusion, par exemple dans la cuve de fusion, et notamment avec du verre destiné à la fabrication d'écrans LCD ou plasma.

L'invention concerne encore un procédé permettant de fabriquer un bloc selon l'invention, ce procédé comportant les étapes successives suivantes :

a) mélange de matières premières de manière à former une charge de départ,
b) fusion complète de ladite charge de départ au moyen d'un four à induction, jusqu'à obtention d'un bain de liquide en fusion,
c) solidification d'un volume V dudit liquide en fusion de manière à constituer un bloc présentant de préférence une hauteur supérieure à 1 mètre,
d) recuisson jusqu'à température ambiante.

A l'étape a), une charge de départ est constituée, de manière conventionnelle, de manière que le bloc réfractaire obtenu à l'issue de l'étape d) puisse présenter la composition chimique d'un bloc conforme à l'invention.

L'invention concerne également un bloc obtenu par un procédé selon l'invention.

Sauf mention contraire, tous les pourcentages de la présente description sont des pourcentages massiques sur la base des oxydes.

Les pourcentages de zircone $ZrO_2$ mentionnés intègrent, suivant l'usage, la présence de l'oxyde d'hafnium et correspondent donc à $ZrO_2 + HfO_2$.

On appelle « hauteur » la plus grande dimension d'un bloc.

On appelle « bloc » une masse présentant au moins une dimension, dans un plan transversal, c'est-à-dire perpendiculaire à la hauteur, supérieure à 10 cm.

On appelle « bloc fondu, coulé et recuit » un bloc ayant été fabriqué par refroidissement d'un liquide en fusion, appelé classiquement « bloc fondu », le liquide en fusion ayant été solidifié entre des parois lui ayant ainsi donné sa forme de bloc, le bloc solidifié ayant ensuite subi une étape de recuisson.

On appelle « recuisson » une étape au cours de laquelle un bloc venant d'être formé est refroidi, généralement jusqu'à température ambiante, à une vitesse lente. Avec des compositions céramiques du type de celles d'un bloc selon l'invention, la durée d'une recuisson est généralement supérieure à plusieurs heures, voire plusieurs jours. Elle dépend notamment des dimensions du bloc. Pour assurer une recuisson, il est connu d'ensevelir le bloc sous un matériau isolant, par exemple l'alumine ou le sable.

La taille d'un grain de zircone d'un bloc selon l'invention est sa plus grande dimension mesurée par observation au microscope optique sur un échantillon de bloc obtenu par coupe et polissage.

## Brève description des dessins

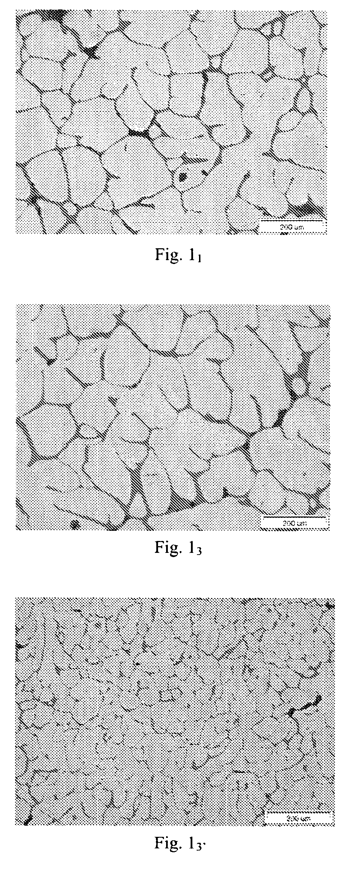

D'autres caractéristiques et avantages de la présente invention apparaîtront encore à la lecture de la description détaillée qui va suivre et à l'examen du dessin annexé dans lequel les figures $I_1$, $I_3$ et $I_{3'}$ représentent des photographies de coupes effectuées au coeur des blocs 1, 3 et 3', respectivement. Sur chaque figure, l'échelle représente chaque fois une longueur de 200 $\mu$m.

## Description détaillée de l'invention

Un procédé comportant les étapes a) à d) décrite précédemment est à présent détaillé.

A l'étape a), la charge de départ est déterminée de manière que le bloc réfractaire obtenu à l'issue de l'étape d) présente plus de 85%, de préférence plus de 90%, de préférence encore plus de 93% de zircone en pourcentages massiques sur la base des oxydes. De telles teneurs en zircone assurent une excellente résistance à la corrosion.

L'oxyde d'hafnium, HfO$_2$, présent dans le bloc selon l'invention est l'oxyde d'hafnium naturellement présent dans les sources de zircone. Sa teneur dans le bloc selon l'invention est donc inférieure ou égale à 5%, généralement inférieure ou égale à 2%.

La présence de silice est nécessaire à la formation d'une phase vitreuse intergranulaire permettant d'accommoder de manière efficace les variations de volume de la zircone lors de sa transformation allotropique réversible, c'est-à-dire lors du passage de la phase monoclinique à la phase tétragonale. De préférence, la teneur en silice dans le bloc est supérieure à 1,5 %, supérieure ou égale à 2,0 %, supérieure ou égale à 2,5 %, voire supérieure ou égale à 3,0 %. Avantageusement, de telles teneurs en silice permettent d'éviter la formation de fissures au moment de la fabrication du bloc, mais aussi pendant l'utilisation du bloc.

En revanche, l'ajout de silice ne doit pas dépasser 10 % car, se faisant au détriment de la teneur en zircone, la résistance à la corrosion s'en trouverait diminuée.

La présence d'alumine est nécessaire à la formation d'une phase vitreuse stable. Une teneur excessive entraîne une instabilité de la phase vitreuse (formation de cristaux).

Dans le cas où le bloc est destiné à des applications où une résistivité électrique élevée est souhaitée, les teneurs en oxydes de sodium Na$_2$O et/ou de potassium K$_2$O sont de préférence inférieures ou égales à 1%, de préférence inférieures ou égales à 0,5 %. De préférence, les blocs selon l'invention ne comportent alors que des traces de Na$_2$O et de K$_2$O. En effet, la présence de ces oxydes a un effet défavorable sur la résistivité électrique en raison de la faible résistivité de la phase vitreuse.

Dans ces applications, il est également préférable que le bloc selon l'invention comporte un dopant choisi dans le groupe formé par V$_2$O$_5$, CrO$_3$, Nb$_2$O$_5$, MoO$_3$, Ta$_2$O$_5$, WO$_3$, et leurs mélanges, de préférence choisi parmi V$_2$O$_5$, Nb$_2$O$_5$, Ta$_2$O$_5$, WO$_3$ et leurs mélanges, de préférence encore parmi Nb$_2$O$_5$, Ta$_2$O$_5$ et leurs mélanges.

De préférence, 0,2 % ≤ P, de préférence 0,5 % ≤ P, de préférence encore 0,6 % ≤ P, de préférence toujours 1,2 % ≤ P et/ou P ≤ 3%, de préférence P ≤ 2,5%, de préférence toujours P ≤ 1,4%, où

$$P = 2{,}43.V_2O_5 + 4{,}42.CrO_3 + 1{,}66.Nb_2O_5 + 3{,}07.MoO_3 + Ta_2O_5 + 1{,}91.WO_3$$

En particulier, il est préférable que la quantité d'oxyde de tantale Ta$_2$O$_5$ soit supérieure ou égale à 0,2 %, de préférence supérieure ou égale à 0,8 % et/ou inférieure ou égale à 3%, de préférence inférieure ou égale à 1,5 %, et que la quantité d'oxyde de nobium Nb$_2$O$_5$ soit supérieure ou égale à 0,2 %, de préférence supérieure ou égale à 0,4 % et/ou inférieure ou égale à 3%, de préférence inférieure ou égale à 1,5 %.

L'ajout de ces dopants dans des proportions respectant ces conditions préférées confère une résistivité électrique remarquable, tout en préservant une bonne résistance à la corrosion par le verre fondu. Le produit réfractaire selon l'invention peut ainsi présenter une résistivité électrique supérieure ou égale à 200 Ω.cm, voire supérieure ou égale à 400 Ω.cm à 1500°C à la fréquence de 100Hz.

Dans le cas où le bloc est destiné à des applications où une bonne résistance au bullage est recherchée, il est avantageux d'ajouter à la charge de départ un dopant choisi parmi Y$_2$O$_3$ et CaO. La quantité d'oxyde d'yttrium Y$_2$O$_3$ est de préférence supérieure ou égale à 0,3 %, de préférence supérieure ou égale à 0,5 % et/ou inférieure ou égale à 3 %, de préférence inférieure à 1,5 %. La quantité d'oxyde de calcium CaO est de préférence supérieure ou égale à 0,2 % et/ou inférieure ou égale à 2,3 %.

Dans tous les modes de réalisation, de préférence, on ajoute systématiquement et méthodiquement les constituants, et notamment le ou les dopant(s), à la charge de départ de manière à garantir la teneur de ces constituants dans le bloc.

Le complément à 100 % de la somme totale des teneurs en zircone, en silice, en alumine et en dopant dans la composition du bloc selon l'invention est constitué par les « autres espèces ». On entend par « autres espèces », des espèces dont la présence n'est pas particulièrement souhaitée. Les autres espèces sont de préférence les seules impuretés en provenance des matières premières.

De préférence, les matières premières sont choisies de manière que la teneur totale des « autres espèces » dans le bloc fondu soit inférieure à 0,6%, de préférence inférieure à 0,2%. A de telles teneurs, on considère que les « autres espèces » ne modifient pas substantiellement les résultats obtenus.

On peut citer les oxydes de fer, de titane et de phosphore, qui sont connus pour être néfastes. Leur teneur doit être limitée à des traces introduites à titre d'impuretés avec les matières premières. De préférence,

- la quantité de Fe$_2$O$_3$ + TiO$_2$ est inférieure à 0,55 %,
- la quantité de P$_2$O$_5$ est inférieure à 0,05 %.

A l'étape b), la fusion est réalisée au moyen d'un four à induction, de préférence sous air.

Un tel four permet en effet d'éviter une contamination en carbone en provenance d'électrodes, comme avec les fours à arcs. Il permet également d'obtenir une fusion complète de la charge de départ, et obtenir ainsi un bain de liquide en fusion très homogène.

Un four à induction permet aussi de procéder à une fusion et à une solidification continues, avec, en régime permanent, un front de solidification sensiblement fixe dans l'espace, qui reste en contact permanent avec le liquide en fusion de la zone de fusion. Le bloc peut ainsi être fabriqué sans opération coûteuse de moulage. Surtout, il peut être constitué progressivement, le durcissement de chaque point de bloc étant effectué dans des conditions de température et de gradient de température sensiblement identiques. Ainsi, le four à induction permet de fabriquer des blocs de grandes dimensions et présentant une microstructure particulièrement homogène.

De préférence, on met en oeuvre un four du type de celui décrit dans FR 1 430 962, incorporé par référence, en opérant avec une puissance comprise entre 100 et 1000 kW et une fréquence délivrée par le générateur apériodique comprise entre 50 et 250 kHz. Le bain de fusion atteint ainsi une température supérieure à 2600°C.

De manière générale, il est important que la solidification s'effectue par progression, entre deux faces opposées du bloc, d'un front de solidification séparant une région liquide et une région durcie. Le front de solidification, de préférence fixe dans l'espace comme décrit dans FR 1 430 962, peut être, au moins en partie, localisé dans une zone de fusion du four.

Il est aussi préférable que la fusion et la solidification soient continues.

Pendant la formation du bloc (tant qu'il existe une région liquide), le refroidissement en aval du front de solidification, c'est-à-dire le refroidissement de la région durcie, peut être contrôlé de manière à être aussi lent que possible. Le dispositif de fabrication du bloc peut ainsi comporter des moyens permettant d'assurer, pendant la formation du bloc, une vitesse de refroidissement de la région durcie inférieure par exemple à 100°C/h, voire inférieure à 50°C/h. Ces moyens peuvent comprendre un calorifugeage et/ou des moyens de chauffage.

La section transversale du bloc peut être quelconque, et notamment supérieure à 0,04 m². Dans un mode de réalisation, la section transversale présente une longueur et/ou une largeur supérieure à 0,20 mètre. La section transversale peut aussi être inférieure à 0,16 m². Dans un mode de réalisation, la section présente une longueur et/ou une largeur inférieure à 0,40 mètre.

De préférence, le bloc réfractaire a une hauteur supérieure à 1 mètre, de préférence supérieure à 1,1 mètre.

Après solidification complète, le bloc subit une étape complémentaire d) de recuisson au cours de laquelle la température est progressivement ramenée à la température ambiante, la vitesse de refroidissement restant inférieure à 20°C par heure, ou inférieure à 15°C par heure, de préférence d'environ 10°C par heure.

De préférence, la recuisson s'effectue en ensevelissant le bloc sous une poudre d'alumine ou de sable.

De manière surprenante, les inventeurs ont constaté que l'utilisation d'un four à induction permettant une solidification par progression d'un front de solidification séparant une région liquide et une région durcie conduit à un bloc dont la surface en contact avec le verre fondu s'use de manière uniforme, ce qui améliore considérablement la durée de vie du bloc et la prévisibilité de cette durée.

**EXEMPLES**

Sans être liés par une théorie, les inventeurs considèrent que les performances des blocs selon l'invention résultent d'une répartition particulièrement régulière de la zircone au sein du bloc, comme le démontrent les exemples suivants.

Dans ces exemples, on a employé les matières premières suivantes :

- de la zircone contenant principalement, en moyenne massique, 98,5% de $ZrO_2$ + $HfO_2$, 0,2% de $SiO_2$ et 0,02 % de $Na_2O$,
- du sable de silice à 99 % de silice,
- de l'alumine de type AC44 vendue par la société Pechiney et contenant en moyenne 99,4 % d'alumine $Al_2O_3$,
- du carbonate de sodium $Na_2CO_3$,
- des oxydes de bore, d'yttrium, de tantale $Ta_2O_5$ et de niobium $Nb_2O_5$ de pureté supérieure à 99%.

Le bloc 1 a été préparé selon le procédé classique de fusion en four à arc électrique puis coulé pour obtenir un bloc de format 260x440x1200mm. Le procédé de fusion à l'arc long décrit dans le brevet français n° 1 208 577 et ses additions n° 75893 et 82310, incorporés par référence, a été utilisé.

Les blocs 2 à 8 ont été préparés suivant un procédé selon l'invention au moyen d'un four de fusion par induction tel que celui décrit ci-dessus, et similaire à celui décrit dans FR 1 430 962, avec une spire de diamètre variable et adapté au format souhaité pour le bloc, une puissance comprise entre 100 et 1000 kW et une fréquence délivrée par le générateur apériodique comprise entre 50 et 250 KHz. Pour les exemples 5 à 8, la spire présentait un diamètre de 275 mm.

Pour chaque bloc 2 à 4, des échantillons cylindriques de diamètre de 30 mm et de longueur 40 mm ont été prélevés au centre du bloc à différentes hauteurs, tous les 100 mm, y compris au niveau des surfaces supérieure et, le cas échéant, inférieure du bloc. Toutes les espèces minoritaires sont mesurées par analyse chimique. Le pourcentage de zircone $ZrO_2 + HfO_2$ constitue le complément à 100% de la somme des teneurs des espèces minoritaires.

Les analyses chimiques sont données en pourcentages massiques.

L'indice d'homogénéité « Ih » est égal à l'écart type sur le pourcentage de zircone « $\sigma$ » divisé par le volume « V » du bloc en m x m x m :

Ih = $\sigma$ / V, où

$$\sigma = \sqrt{\frac{1}{n}\sum_{i=1}^{n}\left(z_i - \overline{z}\right)^2},$$

$\underline{z_i}$ désigne la teneur massique en zircone de l'échantillon « $i$ » du bloc,

$\overline{z}$ désigne la teneur massique moyenne en zircone du bloc, obtenue en moyennant arithmétiquement les valeurs $z_i$,

$n$ désigne le nombre d'échantillons prélevés sur le bloc en fonction de la hauteur H considérée (n = H / 0,1 + 1), et

V désigne le volume du bloc, en $m^3$.

Le bloc 3 a été obtenu par sciage d'un bloc de section 500mm x 400mm.

Les dimensions des blocs ainsi que les résultats des analyses sont donnés dans les tableaux 1 et 2 suivants.

Tableau 1

| Bloc | Section (mm x mm) | Analyse chimique moyenne pour une hauteur H =1200 mm (pourcentages massiques sur la base des oxydes) | | | | | |
|---|---|---|---|---|---|---|---|
| | | $ZrO_2+ HfO_2$ | $SiO_2$ | $Al_2O_3$ | $Na_2O$ | $Y_2O_3$ | $Fe_2O_3 + TiO_2$ |
| 1* | 260 x 440 | 95,63 | 2,93 | 0,88 | 0,17 | 0,15 | 0,14 |
| 2 | 300 x 400 | 95,01 | 3,23 | 1,06 | 0,22 | 0,19 | 0,19 |
| 3 | 250 x 400 | 95,55 | 3,04 | 0,78 | 0,20 | 0,19 | 0,14 |
| 4 | 400 x 500 | 94,15 | 4,11 | 1,00 | 0,26 | 0,19 | 0,17 |
| *en dehors de l'invention | | | | | | | |

Tableau 2

| | Analyse chimique jusqu'à une hauteur H =800 mm | | | Analyse chimique jusqu'à une hauteur H =1000 mm | | | Analyse chimique jusqu'à une hauteur H =1200 mm | | |
|---|---|---|---|---|---|---|---|---|---|
| | Moyenne ($\overline{z}$)(%) | Ecart-type | 1h | Moyenne ($\overline{z}$) (%) | Ecart-type | 1h | Moyenne ($\overline{z}$) (%) | Ecart-type | 1h |
| 1* | 94,34 | 1,172 | 12,81 | 95,79 | 1,141 | 9,97 | 95,63 | 1,094 | 7,97 |
| 2 | 95,30 | 0,442 | 4,60 | 95,17 | 0,581 | 4,84 | 95,01 | 0,800 | 5,56 |
| 3 | 95,75 | 0,215 | 2,69 | 95,69 | 0,248 | 2,48 | 95,55 | 0,414 | 3,45 |
| 4 | 95,12 | 0,599 | 3,74 | 94,58 | 1,328 | 6,64 | 94,15 | 1,617 | 6,75 |
| *en dehors de l'invention | | | | | | | | | |

On constate que les blocs de l'invention ont un indice Ih inférieur à 7 et même inférieur à 6 pour des blocs de section transversale inférieure à 0,15 $m^2$.

Cette répartition homogène de la zircone pourrait expliquer l'usure sensiblement uniforme des blocs selon l'invention lorsqu'ils sont soumis à des conditions très corrosives, et donc leur durée de vie remarquable. Ces blocs sont bien adaptés pour être mis en contact avec des verres de très haute qualité comme des verres pour écrans plats de type LCD ou pour écrans à plasma.

Selon l'invention, des blocs de grande section, à forte teneur en zircone peuvent être fabriqués. Ces blocs sont très homogènes sur la hauteur, en composition chimique et donc pour l'ensemble des propriétés, en particulier la résistivité électrique et la dilatation. Ceci permet avantageusement de procéder à des découpes dans la section de ces gros blocs et d'améliorer ainsi la productivité. On peut également envisager de réaliser des découpes dans la hauteur de ces gros blocs puisque l'indice Ih est satisfaisant à toutes les hauteurs considérées.

Sur les différents blocs 5 à 8, des barreaux cylindriques de produit de 30 mm de diamètre et de 30 mm de hauteur ont été soumis à une différence de potentiel de 1 volt à une fréquence de 100 Hertz à 1500 °C pour réaliser des mesures de résistivité électrique R.

Dans le tableau 3, une case vide correspond à une quantité inférieure ou égale à 0,05% massique.

Tableau 3

|   | $ZrO_2$ | $SiO_2$ | $B_2O_3$ | $Al_2O_3$ | $Al_2O_3/SiO_2$ | $Na_2O$ | $Nb_2O_5$ | $Ta_2O_5$ | $Y_2O_3$ | $Ta_2O_5+1,66\ Nb_2O_5$ | R ($\Omega$.cm) |
|---|---|---|---|---|---|---|---|---|---|---|---|
| 5 | 94,0 | 3,7 | 0,3 | 0,8 | 0,22 | | | 1,2 | | *1,2* | 448 |
| 6 | 94,9 | 3,5 | 0,3 | 0,8 | 0,23 | | 0,5 | | | *0,8* | 460 |
| 7 | 94,6 | 3,6 | 0,2 | 0,8 | 0,22 | | 0,8 | | | *1,3* | 429 |
| 8 | 93,3 | 4,2 | 0,3 | 1,1 | 0,26 | | 0,5 | 0,6 | | *1,4* | 370 |

Le tableau 3 montre que les ajouts de certains dopants permettent d'obtenir une résistivité électrique élevée.

L'invention permet ainsi de fabriquer des blocs de grandes dimensions, qui présentent une teneur en zircone élevée et bien répartie au sein du bloc ainsi qu'une résistivité remarquable.

Par ailleurs, un bloc 3', de même composition et de même dimensions que le bloc 3, a été fabriqué comme le bloc 3, mais sans étape de recuisson. Le refroidissement du bloc 3' a été effectué à l'air libre, comme décrit dans US 5 028 572. Après refroidissement, le bloc 3' comportait une fissure traversante le rendant inutilisable, à la différence du bloc 3 ayant un subi une recuisson.

Par ailleurs, comme représenté sur la figure $I_1$, $I_3$ et $I_{3'}$, la microstructure des blocs 1, 3 et 3' présente des grains de zircone entourés d'une face vitreuse. Les grains de zircone de l'exemple 3' sont cependant beaucoup plus petits que ceux des exemples 1 et 3.

De préférence, au coeur d'un bloc selon l'invention, plus de 50 % en nombre, voire plus de 70 % en nombre des grains de zircone ont une taille supérieure à 200 $\mu$m.

Bien entendu, la présente invention n'est pas limitée aux modes de réalisation décrits et représentés fournis à titre d'exemples illustratifs et non limitatifs.

**Revendications**

1. Bloc réfractaire fondu, coulé et recuit comportant une teneur moyenne en zircone ($ZrO_2$ + $Hf_2O$) de plus de 85% et une teneur en silice $SiO_2$ supérieure ou égale à 1 %, en pourcentages massiques sur la base des oxydes, et dont l'écart type $\sigma$ de la teneur locale en zircone divisé par le volume du bloc en m³ est inférieur à 7,5, l'écart-type $\sigma$ étant évalué par extraction de « $n$ » échantillons, choisis de manière aléatoire ou en des emplacements répartis dans le bloc, de la manière suivante :

$$\sigma = \sqrt{\frac{1}{n} \sum_{i=1}^{n} \left( z_i - \overline{z} \right)^2},$$

où

- $z_i$ désigne la teneur massique en zircone de l'échantillon « i » du bloc, et
- $\overline{z}$ désigne la teneur massique moyenne en zircone du bloc, obtenue en moyennant arithmétiquement les valeurs $z_i$.

2. Bloc selon la revendication précédente, dans lequel l'écart type $\sigma$ de la teneur locale en zircone divisé par le volume du bloc est inférieur à 6.

3. Bloc selon la revendication précédente, dans lequel l'écart type $\sigma$ de la teneur locale en zircone divisé par le volume du bloc est inférieur à 4.

4. Bloc selon l'une quelconque des revendications précédentes, présentant une hauteur supérieure à 1 mètre.

5. Bloc selon l'une quelconque des revendications précédentes, présentant une section, mesurée transversalement à la direction défmissant la hauteur, supérieure à 0,02 m² et/ou inférieure à 0,25 m².

6. Bloc selon l'une quelconque des revendications précédentes, dans lequel, en pourcentages massiques sur la base des oxydes,

- $ZrO_2 \geq 90$ %, et/ou
- $SiO_2 \leq 10$%, et/ou
- $Al_2O_3 \geq 0,1$% et/ou $Al_2O_3 \leq 2,5$%.

7. Bloc selon la revendication précédente, dans lequel, en pourcentages massiques sur la base des oxydes,

- $ZrO_2 \geq 93$ %, et/ou
- $SiO_2 \geq 3$% et/ou $SiO_2 \geq 8$%, et/ou
- $Al_2O_3 \geq 0,5$% et/ou $Al_2O_3 \leq 1,5$%.

**8.** Bloc selon l'une quelconque des revendications précédentes, comportant un dopant choisi dans le groupe formé par $V_2O_5$, $CrO_3$, $Nb_2O_5$, $MoO_3$, $Ta_2O_5$, $WO_3$. et leurs mélanges, la teneur en dopant étant telle que, en pourcentages massiques sur la base des oxydes,

$$0,2\ \% \leq 2,43.V_2O_5+4,42.CrO_3+1,66.Nb_2O_5+3,07.MoO_3+Ta_2O_5+1,91.WO_3$$

**9.** Bloc selon la revendication précédente, dans lequel

$$0,5\ \% \leq 2,43.V_2O_5+4,42.CrO_3+1,66.Nb_2O_5+3,07.MoO_3+Ta_2O_5+1,91.WO_3 \text{ et/ou } 2,43.V_2O_5+4,42.CrO_3+1,66.Nb_2O_5+3,07.MoO_3+Ta_2O_5+1,91.WO_3 \leq 3\%.$$

**10.** Bloc selon l'une quelconque des deux revendications immédiatement précédentes, dans lequel

- $Ta_2O_5 > 0,2$ % et/ou $Ta_2O_5 \leq 3$ %, et/ou
- $Nb_2O_5 \geq 0,2$ % et/ou $Nb_2O_5 \leq 3$ %.

**11.** Bloc selon l'une quelconque des revendications précédentes, dans lequel, en pourcentages massiques sur la base des oxydes,

- $Y_2O_3 \geq 0,3$ % et/ou $Y_2O_3 \leq 3$ % et/ou
- $Na_2O + K_2O \leq 1$ %, t/ou
- $B_2O_3 > 0,05$ % et/ou $B_2O_3 \leq 1,5\%$.

**12.** Block selon la revendication précédente, dans lequel

- $Y_2O_3 \geq 0,5$ % et/ou $Y_2O_3 \leq 1,5$ % et/ou
- $Na_2O + K_2O \leq 0,5\%$, et/ou
- $B_2O_3 > 0,1$ % et/ou $B_2O_3 \leq 0,8$ %, et/ou
- $Ta_2O_5 \geq 0,8$ % et/ou $Ta_2O_5 \leq 1,5$ %, et/ou
- $Nb_2O_5 \geq 0,4$ % et/ou $Nb_2O_5 \leq 1,5$ %.

**13.** Bloc selon l'une quelconque des revendications précédentes, dans lequel plus de 85% de la zircone est monoclinique.

**14.** Bloc selon l'une quelconque des revendications précédentes, dans lequel, au coeur du bloc, plus de 50 % en nombre des grains de zircone ont une taille supérieure à 200 $\mu$m.

**15.** Utilisation d'un bloc selon l'une quelconque des revendications précédentes dans une région d'un four de verrerie où le bloc est susceptible d'entrer en contact avec du verre en fusion.

**Claims**

**1.** A fused, cast, and annealed refractory block comprising a mean zirconia ($ZrO_2 + HfO_2$) content of more than 85% and a silica $SiO_2$ content of 1% or more, as a percentage by weight based on the oxides, wherein the standard deviation a of the local zirconia content divided by the volume of the block, in $m^3$, is less than 7.5, the standard deviation a being evaluated by taking "$n$" samples, selected randomly or at positions distributed in the block, as follows:

$$\sigma = \sqrt{\frac{1}{n}\sum_{i=1}^{n}\left(z_i - \bar{z}\right)^2}\ ;$$

in which:

· $z_i$ denotes the zirconia content, in percentage by weight, in sample "i" of the block; and
· $\bar{z}$ denotes the mean zirconia content, in percentage by weight, in the block, obtained by taking the arithmetic mean of values $z_i$.

2. A block according to the preceding claim, in which the standard deviation $\sigma$ of the local zirconia content divided by the volume of the block is less than 6.

3. A lock according to the preceding claim, in which the standard deviation $\sigma$ of the local zirconia content divided by the volume of the block is less than 4.

4. A block according to any one of the preceding claims, having a height of more than 1 m.

5. A block according to any one of the preceding claims, having a section, measured transverse to the direction defining the height, of are than 0.02 m$^2$ and/or less than 0.25 m$^2$,

6. A block according to any one of the preceding claims in which, as percentages by weight based on the oxides:

   · $ZrO_2 \geq 90$ %; and/or
   · $SiO_2 \leq 10$%; and/or
   · $Al_2O_3 \geq 0.0.1$% ; and/or $Al_2O_3 \leq 2.5$%.

7. A block according to the preceding claim in which, as a percentage by weight based on the oxides:

   · $ZrO_2 \geq 93$ %; and/or
   · $SiO_2 \geq 3$%; and/or $SiO_2 \leq 8$%; and/or
   · $Al_2O_3 \geq 0.5$% and/or $Al_2O_3 \leq 1.5$%.

8. A block according to any one of the preceding claims, comprising a dopant selected from the group formed by $V_2O_5$, $CrO_3$, $Nb_2O_5$, $MoO_3$, $Ta_2O_5$, $WO_3$ and mixtures thereof, the dopant content being such that, as a percentage by weight based on the oxides:

   $$0.2 \% \leq 2.43.V_2O_5+4.42.CrO_3+1.66.Nb_2O_5+3.07.MoO_3+Ta_2O_5+1.91WO_3$$

9. A block according to the preceding claim, in which:

   $$0.5 \% \leq 2.43.V_2O_5+4.42.CrO_3+1.66.Nb_2O_5+3.07.MoO_3+Ta_2O_5+1.91.WO_3; \text{ and/or } 2.43.V_2O_5+4.42.CrO_3+1.66.Nb_2O_5+3.07.MoO_3+Ta_2O_5+1.91.WO_3 \leq 3\%.$$

10. A block according to any one of the two immediately preceding claims, in which:

    · $Ta_2O_5 \geq 0.2$ %; and/or $Ta_2O_5 \leq 3$ %; and/or
    · $Nb_2O_5 \geq 0.2$ %; and/or $Nb_2O_5 \leq 3$ %.

11. A block according to any one of the preceding claims in which, as percentages by weight based on the oxides:

    · $Y_2O_3 \geq 0.3$ %; and/or $Y_2O_3 \leq 3$ %; and/or
    · $Na_2O + K_2O \leq 1$%; and/or
    · $B_2O_3 > 0.05$ %; and/or $B_2O_3 \leq 1.5$ %.

12. A block according to the preceding claim, in which:

    · $Y_2O_3 \geq 0.5$ %; and/or $Y_2O_3 \leq 1.5$ %; and/or
    · $Na_2O + K_2O \leq 0.5$%; and/or
    · $B_2O_3 > 0.1$ %; and/or $B_2O_3 \leq 0.8$ %; and/or
    · $Ta_2O_5 \geq 0.8$ %; and/or $Ta_2O_5 \leq 1.5$ %; and/or
    · $Nb_2O_5 \geq 0.4$ %; and/or $Nb_2O_5 \leq 1.5$ %.

13. A block according to any one of the preceding claims, in which more than 85% of the zirconia is monoclinic.

14. A block according to any one of the preceding claims, in which, in the core of the block, more than 50%, by number, of the zirconia grains are more than 200 $\mu$m in size.

**15.** Use of a block according to any one of the preceding claims in a region of a glass furnace where the block is susceptible of coming into contact with molten glass.

**Patentansprüche**

**1.** Feuerfester Block, der geschmolzen, gekühlt und geglüht ist, enthaltend einen mittleren Gehalt an Zirkon ($ZrO_2$ + $Hf_2O$) von mehr als 85% und einen Silikatgehalt $SiO_2$, der größer oder gleich 1% ist und zwar in Massenprozenten auf der Oxidbasis, und dessen Standardabweichung σ des lokalen Zirkongehaltes dividiert durch das Volumen des Blocks in $m^3$ geringer als 7,5 ist wobei die Standardabweichung σ durch Extraktion von "n" Proben ermittelt worden ist, die mit einer Zufallsmethode ausgewählt worden sind, was die Positionsverteilung derselben im Block betrifft und zwar folgendermaßen:

$$\sigma = \sqrt{\frac{1}{n} \sum_{i=1}^{n} \left( z_i - \overline{z} \right)^2} ,$$

wobei

- $z_i$ bezeichnet den Massenanteil an Zirkon der Probe "i" des Blocks und
- $\overline{z}$ bezeichnet den mittleren Massenanteil an Zirkon des Blocks der durch arithmetrische Mittelwertbildung der Werte $z_i$ verhalten wird.

**2.** Block nach dem vorhergehenden Anspruch, in welchem die Standardabweichung σ des lokalen Zirkongehalts dividiert durch das Blockvolumen kleiner als 6 ist.

**3.** Block nach dem vorhergehenden Anspruch, in welchem die Standardabweichung σ des lokalen Zirkongehaltes dividiert durch das Blockvolumen kleiner als 4 ist.

**4.** Block nach einem der vorhergehenden Ansprüche mit einer Höhe, die größer als 1 m ist.

**5.** Block nach einem der vorhergehenden Ansprüche, welche einen Schnitt aufweist, gemessen transversal zur Richtung die die Höhe definiert, der größer als $0,02_M{}^2$ und/oder kleiner als $0,25 m^2$ ist.

**6.** Block nach einem der vorhergehenden Ansprüche, in welchem in Massenprozenten auf der Oxydbasis,

- $ZrO_2 \geq 90\%$ und/oder
- $SiO_2 \leq 10\%$ und/oder
- $Al_2O_3 \geq 0.1\%$ und/oder $Al_2O_3 \leq 2,5\%$ ist.

**7.** Block nach dem vorhergehenden Anspruch, in dem in Massenprozenten auf der Oxydbasis,

- $ZrO_2 \geq 93\%$ und/oder
- $SiO_2 \geq 3\%$ und/oder $SiO_2 \leq 8\%$, und/oder
- $Al_2O_3 \geq 0,5\%$ und/oder $Al_2O_3 \leq 1,5\%$ ist.

**8.** Block nach einem der vorhergehenden Ansprüche, welcher eine Dotierung enthält, die aus der Gruppe aus $V_2O_5$, $CrO_3$, $Nb_2O_5$, $MoO_3$, $Ta_2O_5$, $WO_3$ und ihren Mischungen ausgewählt ist, wobei der Dotierungsanteil in Massenprozenten auf der Oxydbasis folgendermaßen ist:

$0,2\% \leq 2,43. V_2O_5 + 4,42.CrO_3 + 1,66.Nb_2O_5 + 3,07. MoO_3 + Ta_2O_5 + 1,91. WO_3$

**9.** Block nach dem vorhergehenden Anspruch, in dem

$0,5\% \leq 2,43. V_2O_5 + 4,42.CrO_3 + 1,66. Nb_2O_5 + 3,07. MoO_3 + Ta_2O_5 + 1,91.WO_3$ und/oder
$2,43. V_2O_5 + 4,42.CrO_3 + 1,66. Nb_2O_5 + 3,07. MoO_3 + Ta_2O_5 + 1,91. WO_3 < 3\%$.

**10.** Block nach einem der beiden vorstehenden Ansprüche, in welchem

- $Ta_2O_5 \geq 0,2\%$ und/oder $Ta_2O_5 \leq 3\%$ und/oder
- $Nb_2O_5 \geq 0,2\%$ und/oder $Nb_2O_5 \leq 3\%$.

**11.** Block nach einem der vorhergehenden Ansprüche, in welchen in Massenprozenten auf der Oxydbasis

- $Y_2O_3 \geq 0,3\%$ und/oder $Y_2O_3 \leq 3\%$ und/oder
- $Na_2O + K_2O \leq 1\%$, und/oder
- $B_2O_3 > 0,05\%$ und/oder $B_2O_3 \leq 1,5\%$ ist.

**12.** Block nach dem vorhergehenden Anspruch, in welchem

- $Y_2O_3 \geq 0,5\%$ und/oder $Y_2O_3 \leq 1,5\%$ und/oder
- $Na_2O + K_2O \leq 0,5\%$, und/oder
- $B_2O_3 \geq 0,1\%$ und/oder $B_2O_3 \leq 0,8\%$ und/oder
- $Ta_2O_5 \geq 0,8\%$ und/oder $Ta_2O_5 \leq 1,5\%$ und/oder
- $Nb_2O_5 \geq 0,4\%$ und/oder $Nb_2O_5 \leq 1,5\%$.

**13.** Block nach einem der vorhergehenden Ansprüche, in welchen mehr als 85% des Zirkons monolin ist.

**14.** Block nach einem der vorhergehenden Ansprüche, in welchen im Kern des Blocks mehr als 50% der Anzahl der Zirkonkörner eine Größe größer als $200 \mu m$ aufweisen.

**15.** Verwendung eines Blocks nach einem der vorhergehenden Ansprüche in einer Region eines Glasofens, wo der Block geeignet ist, mit dem geschmolzenen Glas in Kontakt zu gelangen.

Fig. $1_1$

Fig. $1_3$

Fig. $1_{3'}$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5028572 A
- EP 403387 B
- FR 1430962
- FR 1208577
- FR 75893
- FR 82310